# EUROPÄISCHE PATENTSCHRIFT

(11) **EP 2 479 878 B1**
(45) Veröffentlichungstag und Bekanntmachung des Hinweises auf die Patenterteilung: **20.07.2016**
(21) Anmeldenummer: 11152043.3
(22) Anmeldetag: 25.01.2011
(51) Int. Cl.: H02M 3/158

(54) **Verfahren zur Regelung eines Tief-Hochsetzstellers**
Method for regulating a step-up/step-down converter
Procédé destiné au réglage d'un convertisseur abaisseur-élévateur

(43) Veröffentlichungstag der Anmeldung: 25.07.2012
(73) Patentinhaber: Siemens Aktiengesellschaft, 80333 München (DE)
(72) Erfinder: Hallak, Jalal, 1220, Wien (AT)
(74) Vertreter: Maier, Daniel Oliver

(56) Entgegenhaltungen:
- WO-A2-2009/033924
- US-A1- 2004 239 299
- STEFAN WAFFLER ET AL: "A Novel Low-Loss Modulation Strategy for High-Power Bidirectional Buck Boost Converters", IEEE TRANSACTIONS ON POWER ELECTRONICS, IEEE SERVICE CENTER, PISCATAWAY, NJ, US, Bd. 24, Nr. 6, 1. Juni 2009 (2009-06-01), Seiten 1589-1599, XP011262259, ISSN: 0885-8993
- HENZE C P ET AL: "Zero-voltage switching in high frequency power converters using pulse width modulation", 19880201; 19880201 - 19880205, 1. Februar 1988 (1988-02-01), Seiten 33-40, XP010070071,

## Beschreibung

Die Erfindung betrifft ein Verfahren zur Regelung eines getakteten Tief-Hochsetzstellers, wobei mit einer gemeinsamen Taktfrequenz ein Tiefsetzer-Schaltelement mit einem ersten pulsweitenmodulierten Schaltsignal angesteuert wird und ein Hochsetzer-Schaltelement mit einem zweiten pulsweitenmodulierten Schaltsignal angesteuert wird, zur Umwandlung einer Eingangsspannung in eine geregelte Ausgangsspannung, wobei ein Reglersignal eines Ausgangsspannungsreglers zur Erzeugung der pulsweitenmodulierten Schaltsignale verwendet wird. Des Weiteren betrifft die Erfindung einen Schaltwandler zur Durchführung des Verfahrens.

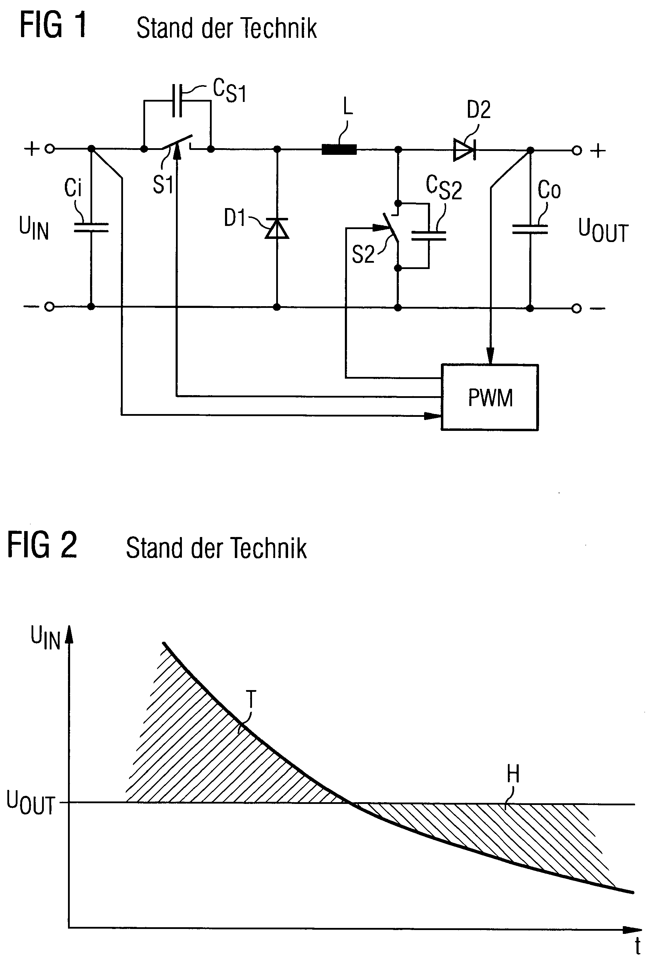

Sogenannte Tief-Hochsetzsteller sind seit langem bekannt. Dabei handelt es sich im Wesentlichen um Schaltwandler, die abwechselnd oder in einem Übergangsbereich gleichzeitig nach der Art eines Hochsetzstellers und nach der Art eines Tiefsetzstellers arbeiten. In einer entsprechenden Schaltungsanordnung sind eine gemeinsame Drossel sowie ein gemeinsamer Eingangsfilter und ein gemeinsamer Ausgangsfilter vorgesehen. In der Regel ist das Tiefsetzer-Schaltelement zwischen die Eingangsspannung und den ersten Anschluss der Drossel geschaltet. Das Bezugspotenzial der Eingangsspannung ist einerseits mit dem Bezugspotenzial der Ausgangsspannung verbunden und andererseits über eine erste Diode ebenfalls an den ersten Anschluss der Drossel geschaltet. Das Hochsetzer-Schaltelement schaltet das Bezugspotenzial an den zweiten Anschluss der Drossel. Dieser zweite Anschluss der Drossel ist zudem über eine zweite Diode mit dem Anschluss der Ausgangsspannung verbunden (Fig. 1). Die Dioden können dabei auch als Synchronschalter ausgebildet sein.

Übersteigt die Eingangsspannung die Ausgangsspannung, arbeitet der Schaltwandler als Tiefsetzsteller. Sobald die Eingangsspannung unter die Ausgangsspannung abfällt, erfolgt ein Wechsel in den Hochsetzstellerbetrieb (Fig. 2).

Die beiden Schaltelemente werden in der Regel mittels pulsweitenmodulierter Schaltsignale angesteuert. Zur Bildung dieser Schaltsignale wird zumeist ein Reglersignal eines Ausgangsspannungsreglers einem Sägezahn- oder Dreieckssignal überlagert. Beispielsweise ist in der Patentschrift DE 43 06 070 C1 ein Tief-Hochsetzsteller offenbart, wobei mit nur einem Reglersignal zwei pulsweitenmodulierte Signale erzeugt werden. Ein Sägezahnsignal ist dabei gegenüber dem zweiten Sägezahnsignal um einen Wert gleich der Amplitude verschoben. Damit beträgt bei steigendem Reglerausgangssignal das Tastverhältnis des ersten pulsweitenmodulierten Schaltsignals zur Ansteuerung des Tiefsetzstellers 100% Prozent, bevor das zweite Schaltsignal dem Hochsetzsteller erste Schaltimpulse liefert.

Um Spannungsabfälle in den Bauelementen des Schaltwandlers zu kompensieren, kennt man auch Verfahren, bei welchen die beiden Sägezahnsignale um einen Wert gleich der Amplitude abzüglich eines Korrekturwertes verschoben sind. Eine derartige Überlagerung der Sägezahnsignale zur Realisierung eines überschneidenden Betriebs des Hoch- und Tiefsetzstellers ist aus der US 6 166 527 A bekannt.

Aus der WO 2009/033924 A2 ist bekannt, während eines Übergangs vom Tiefsetzstellerbetrieb zum Hochsetzstellerbetrieb dem Hochsetzer-Schaltelement ein früheres Takten aufzuzwingen. Dabei wird ein weiteres pulsweitenmoduliertes Schaltsignal erzeugt, welches beim Übergang ein frühres Takten vorgibt.

Ein störungsfreier Übergang zwischen den beiden Betriebsarten ist in der Regel nur möglich, wenn die Schaltelemente des Tief-Hochsetzstellers in einem kontinuierlichen Modus geschaltet werden. Die gemeinsame Drossel bleibt dabei immer magnetisch aufgeladen und es kommt zu keinen Resonanzschwingungen, welche gewöhnlich nach einer erfolgten Entmagnetisierung der Drossel auftreten.

In einem diskontinuierlichen Modus wird das jeweilige Schaltelement eingeschaltet, nachdem die Drossel entmagnetisiert ist. Es tritt also eine Totzeit auf. Nach dem Stand der Technik wird in einem diskontinuierllichem Modus sogenanntes quasiresonantes Schalten (Valley-Switching) angestrebt. Dabei wird das Schaltelement eingeschaltet, wenn die mit einer Resonanzfrequenz schwingende Spannung am abgeschalteten Schaltelement ein Minimum aufweist. Auf diese Weise werden Einschaltverluste niedrig gehalten.

Bei einem gattungsgemäßen Tief-Hochsetzsteller können unbestimmte Resonanzereignisse innerhalb vorhandener Schwingkreise zu Störungen führen. Solche Störungen betreffen beispielsweise erhöhte Verluste, weil kein quasiresonantes Schalten erfolgen kann. Zudem können auftretende Störungen zu unerwünschten Geräuschemissionen führen.

Die Schrift S. Waffler et al., "A Novel Low-Loss Modulation Strategy for High-Power Bidirectional Buck Boost Converters", IEEE Transactions on Power Electronics, IEEE Service Center, Piscataway, NJ, US, Bd. 24, Nr. 6, 1. Juni 2009, Seiten 1589 - 1599, XP011262259, ISSN 0885-8993, beschreibt einen Hoch-Tiefsetzsteller, welcher in einem diskontinuierlichen Modus betrieben wird und in welchem während einer Nullspannung geschaltet wird, um Schaltverluste zu vermindern. Dabei wird zum Erreichen der Nullspannungsschaltbedingung mit schnellen analogen Vergleichern die Spannungen der Halbbrücke überwacht. Sollten diese Spannungen zu Null werden, werden die entsprechenden Schalter unter Nullspannungskonditionen geschlossen.

Der Erfindung liegt die Aufgabe zugrunde, für ein Verfahren der eingangs genannten Art eine Verbesserung gegenüber dem Stand der Technik anzugeben. Insbesondere soll ein störungsfreier Betrieb in einem diskontinuierlichen Modus realisiert werden. Eine weitere Aufgabe besteht darin, einen Tief-Hochsetzsteller zur Durchführung des Verfahrens zu beschreiben.

Erfindungsgemäß wird diese Aufgabe gelöst durch ein Verfahren gemäß Anspruch 1 und einen Tief-Hochsetzsteller gemäß Anspruch 7. Verbesserungen sind den abhängigen Ansprüchen zu entnehmen.

Dabei wird der Tief-Hochsetzsteller in einem diskontinuierlichen Modus mit quasiresonantem Schalten betrieben, wobei der Drosselstrom oder der Strom durch das Tiefsetzer-Schaltelement erfasst und mit einem Referenzstrom verglichen wird, wobei das Reglersignal in dem Ausmaß verstärkt wird, in dem die Erreichung des Referenzstromes zeitlich vor einem Abschaltimpuls des ersten pulsweitenmodulierten Schaltsignals auftritt und wobei mittels des verstärkten Reglersignals das zweite pulsweitenmodulierte Schaltsignal erzeugt wird.

Die beschriebenen Eingriffe in die Regelung haben zur Folge, dass nach einer Drosselentmagnetisierung immer ein eindeutiger Resonanzzustand besteht, welcher ein problemloses quasiresonantes Schalten ermöglicht. Eine abfallende Eingangsspannung führt zunächst zu einem Ansteigen des Reglersignals. Eine Verstärkung des Reglersignals bewirkt in weiterer Folge, dass das Hochsetzer-Schaltelement früher zu takten beginnt, wenn sich die Eingangsspannung der Ausgangsspannung annähert. Bei der Überlagerung mit einem gleichbleibendem Sägezahn- oder Dreieckssignal erfolgen Überschneidungen, welche die Ein- und Ausschaltzeiten bestimmen. Die Überschneidungen treten früher als mit dem nicht verstärkten Reglersignal auf. Das nicht verstärkte Reglersignal wird dabei weiterhin zur Erzeugung des ersten pulsweitenmodulierten Schaltsignals für das Tiefsetzer-Schaltsignal herangezogen.

Die frühere Aktivierung des Hochsetzstellers führt dazu, dass der Ausgangsspannungsregler ein niedrigeres Reglersignal vorgibt, um die Ausgangsspannung einem gewünschten Sollwert nachzuregeln. Das Tiefsetzer-Schaltelement taktet weiter, während die Eingangsspannung unter die Ausgangsspannung abfällt. Dieses weiterhin erzwungene Abschalten des Tiefsetzsteller-Schaltelements bewirkt, dass sich ein parasitärer Kondensator dieses Tiefsetzsteller-Schaltelements weiterhin auflädt. Der parasitäre Kondensator bildet gemeinsam mit der Drosselinduktivität und einem parasitären Kondensator des Hochsetzer-Schaltelements einen Resonanzschwingkreis. Die dabei auftretenden Spannungsminima an den Schaltelementen werden genutzt, um den Tief-Hochsetzsteller quasiresonant zu schalten.

Ohne die angegebene Maßnahme würde beim Übergang vom Tiefsetzstellerbetrieb zum Hochsetzstellerbetrieb ein undefinierter Zustand entstehen. Je nachdem, ob das Tiefsetzer-Schaltelement während eines Schaltzyklus gerade noch abschaltet oder bereits durchgehend eingeschaltet bleibt, würde sich der Ladezustand des parasitären Kondensators des Tiefsetzsteller-Schaltelements laufend ändern. Das hätte ein von Taktzyklus zu Taktzyklus unterschiedliches Resonanzverhalten des Schwingkreises zur Folge. Ein quesiräsonantes Schalten wäre nicht mehr möglich.

Vorteilhaft ist es, wenn als Referenzstrom jener Strom vorgegeben wird, welcher gerade erforderlich ist, um einen parasitären Kondensator des Tiefsetzer-Schaltelements auf den Wert der Eingangsspannung aufzuladen. Der Eingriff in die Regelung bleibt auf ein Mindestmaß beschränkt, ohne die angestrebte Wirkung zu beeinträchtigen.

Des Weiteren ist es von Vorteil, wenn mittels eines Vergleichs des Drosselstromes oder des Stromes durch das Tiefsetzer-Schaltelement mit dem Referenzstrom ein Vergleichssignal gebildet wird, welches einen Vergleichsimpuls aufweist, wenn der Drosselstrom bzw. der Strom durch das Tiefsetzer-Schaltelement den Wert des Referenzstromes erreicht. Ein solches Signal ist mittels eines einfachen Schaltungsaufbaus generierbar.

Dabei sieht eine vorteilhafte Weiterbildung des Verfahrens vor, dass mittels einer Phasenbewertung des ersten pulsweitenmodulierten Schaltsignals und des Vergleichssignals ein Phasendifferenzsignal gebildet wird, dass dabei das Phasendifferenzsignal gleich Null ist, wenn innerhalb eines Schaltzyklus der Vergleichsimpuls des Vergleichssignals zeitlich nach dem Abschaltimpuls des ersten pulsweitenmodulierten Schaltsignals auftritt und dass das Phasendifferenzsignal proportional mit der zeitlichen Differenz zwischen Vergleichsimpuls des Vergleichssignals und Abschaltimpuls des ersten pulsweitenmodulierten Schaltsignals zunimmt, wenn innerhalb eines Schaltzyklus der Vergleichsimpuls des Vergleichssignals zeitlich vor dem Abschaltimpuls des ersten pulsweitenmodulierten Schaltsignals auftritt. Das Phasendifferenzsignal ist unmittelbar zur Verstärkung des Reglersignals nutzbar.

Insbesondere ist es günstig, die Verstärkung in der Weise zu realisieren, dass das Phasendifferenzsignal und das Reglersignal zur Erzeugung eines verstärkten Reglersignals addiert werden.

Eine weitere Verbesserung beim Übergang vom Tiefsetzstellerzum Hochsetzstellerbetrieb ist gegeben, wenn das Hochsetzer-Schaltelement in der Weise angesteuert wird, dass bei einer Annäherung der fallenden Eingangsspannung an eine kleinere Ausgangsspannung das Hochsetzer-Schaltelement mit ansteigendem Tastverhältnis zu takten beginnt, bevor die Eingangsspannung gleich der Ausgangsspannung ist. Auf diese Weise wird bei jedem Übergang vom Tiefsetzsteller- zum Hochsetzstellerbetrieb sichergestellt, dass das Hochsetzer-Schaltelement bereits mit sehr kurzen Einschaltzeiten zu takten beginnt, wenn sich die Ausgangsspannung an die Eingangsspannung annähert. Dies geschieht unabhängig vom Verlauf des zweiten pulsweitenmodulierten Schaltsignals, welches in der Regel durch Überlagerung eines Sägezahn- oder Dreieckssignals mit dem Reglersignal erzeugt wird. Diese Maßnahme führt dazu, dass der Verlauf des Stromes in der Drossel des Tief-Hochsetzstellers in den Übergangsphasen vom Tiefsetzsteller- zum Hochsetzstellerbetrieb kontinuierlich verläuft.

Der erfindungsgemäße Tief-Hochsetzsteller zur Durchführung eines der oben beschriebenen Verfahren sieht vor, dass ein Reglersignal eines Ausgangsspannungsreglers gemeinsam mit einem Sägezahn- oder Dreieckssignal einem ersten Pulsweitenmodulator zugeführt ist, an dessen Ausgang das erste pulsweitenmodulierte Schaltsignal zur Ansteuerung des Tiefsetz-Schaltelements anliegt und wobei ein um im Wesentlichen eine Amplitude des Sägezahn- oder Dreiecksignals versetztes weiteres Sägezahn- oder Dreiecksignal einem zweiten Pulsweitenmodulator zugeführt ist, an dessen Ausgang das zweite pulsweitenmodulierte Schaltsignal zur Ansteuerung des Hochsetzer-Schaltelements anliegt. Dabei sind der Drosselstrom oder der Strom durch das Tiefsetzer-Schaltelement und ein Referenzstrom einem Komparator zugeführt, wobei das Vergleichssignal am Ausgang des Komparators und das erste pulsweitenmodulierte Schaltsignal einem Phasenbewertungsmodul zugeführt sind, wobei das Phasendifferenzsignal am Ausgang des Phasenbewertungsmoduls anliegt und wobei das mit dem Phasendifferenzsignal verstärkte Reglersignal dem zweiten Pulsbreitenmodulator zugeführt ist. Somit ist ein einfacher Aufbau gegen, der sowohl mit diskreten Bauelementen als auch mittels einer integrierten Schaltung realisierbar ist.

Vorteilhafterweise ist das Phasenbewertungsmodul als Funktionsmodul eines Mikrokontrollers ausgebildet. Alternativ dazu ist eine Flip-Flop-Schaltung mit nachgeschalteter Glättungsstufe vorzusehen.

Zur Erzeugung des zweiten pulsweitenmodulier Schaltsignals ist es vorteilhaft, wenn das Phasendifferenzsignal und das Reglersignal einem Additionsglied zugeführt sind und wenn das am Ausgang des Additionsglied anliegende verstärkte Reglersignal dem zweiten Pulsweitenmodulator zugeführt ist. Für einen störungsfreien Übergang vom Tiefsetzsteller- zum Hochsetzstellerbetrieb ist es zudem von Vorteil, wenn ein dritter Pulsweitenmodulator vorgesehen ist, dem das Sägezahn- oder Dreieckssignal und ein Ausgangssignal eines Übergangskontrollers zugeführt sind und welcher gemeinsam mit dem zweiten Pulsweitenmodulator über eine Oder-Schaltung mit dem Hochsetzer-Schaltelement verbunden ist. Mittels des Ausgangssignals des Übergangskontrollers generiert der dritte Pulsweitenmodulator unabhängig vom Reglersignal ein pulsweitenmoduliertes Signal, welches im Übergangsbereich vom Tiefsetzsteller- zum Hochsetzstellerbetrieb das Hochsetzer-Schaltelement früher takten lässt, als dies infolge des zweiten pulsweitenmodulierten Schaltsignals geschehen würde.

Die Erfindung wird nachfolgend in beispielhafter Weise unter Bezugnahme auf die beigefügten Figuren erläutert. Es zeigen in schematischer Darstellung:
- Fig. 1: Tief-Hochsetzsteller nach dem Stand der Technik
- Fig. 2: Spannungsverlauf eines bekannten Tief-Hochsetzstellers
- Fig. 3: Blockschaltbild eines beispielhaften Tief-Hochsetzstellers ohne Übergangskontroller
- Fig. 4: Verlauf der Schaltsignale über der Zeit ohne Eingriff in die Regelung
- Fig. 5: Verlauf der Schaltsignale über der Zeit mit Eingriff in die Regelung
- Fig. 6: Spannungsverlauf eines erfindungsgemäßen Tief-Hochsetzstellers
- Fig. 7: Blockschaltbild eines beispielhaften Tief-Hochsetzstellers mit Übergangskontroller
- Fig. 8: Signalverläufe eines Tief-Hochsetzstellers nach Fig. 7

Ein bekannter Leistungsteil eines Tief-Hochsetzstellers umfasst eine Drossel L, welche über ein Tiefsetzer-Schaltelement S1 an eine Eingangsspannung U_{IN} angeschlossen ist. Eine Ausgangsspannung U_{OUT} und die Eingangsspannung U_{IN} sind auf dasselbe Bezugspotenzial bezogen. Dabei sind gewöhnlich ein Eingangskondensator Ci und ein Ausgangskondensator Co vorgesehen. Zwischen dem Bezugspotenzial und einer Verbindung zwischen Drossel L und Tiefsetzer-Schaltelement S1 ist eine erste Diode D1 geschaltet. Diese wird im Tiefsetzstellerbetrieb leitend, wenn das Tiefsetzer-Schaltelement S1 abschaltet. Ausgangsseitig ist die Drossel L über eine zweite Diode D2 mit dem positiven Ausgang des Tief-Hochsetzstellers verbunden. Eine Verbindung zwischen Drossel L und zweiter Diode D2 ist über ein Hochsetzer-Schaltelement S2 an das Bezugspotenzial geschaltet. Die beiden Schaltelemente S1, S2 weisen jeweils einen parasitären Kondensator C_{S1}, C_{S2} auf und werden mittels einer Pulsweitenmodulator-Steuerung PWM angesteuert. Zur Regelung der Ausgangsspannung U_{OUT} sind der Pulsweitenmodulator-Steuerung PWM sowohl die Ausgangsspannung U_{OUT} als auch die Eingangsspannung U_{IN} zugeführt (Fig. 1).

Sobald die Eingangsspannung U_{IN} unter die Ausgangsspannung U_{OUT} abfällt, erfolgt ein Übergang vom Tiefsetzstellerbetrieb T zum Hochsetzstellerbetrieb H (Fig. 2).

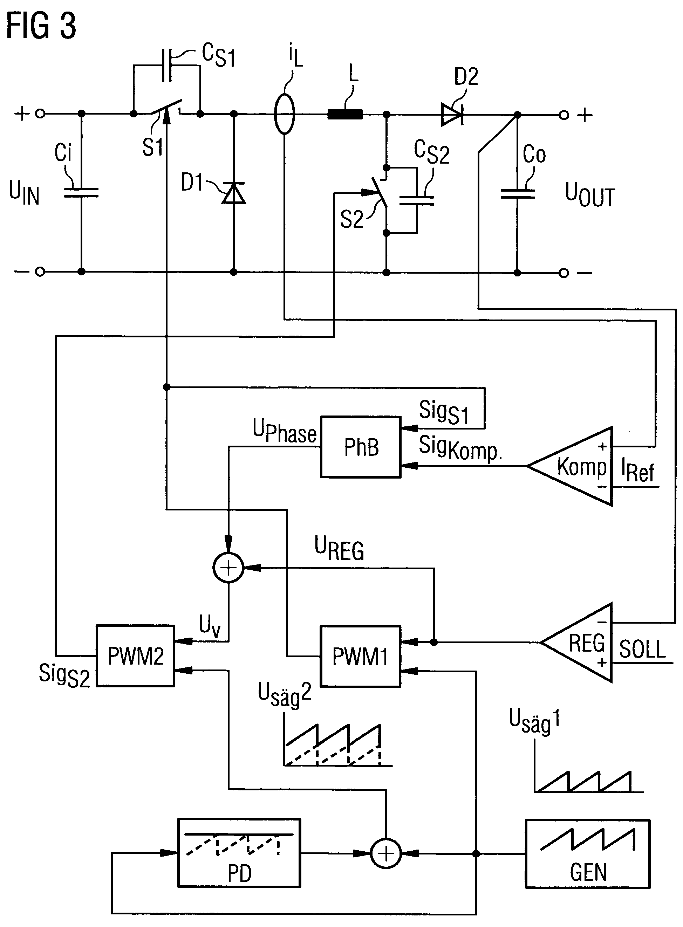

In einem diskontinuierlichen Betrieb bilden die parasitären Kondensatoren C_{S1}, C_{S2} mit der Induktivität der Drossel L einen Resonanzschwingkreis. Um zu vermeiden, dass während des Übergangs vom Tiefsetzstellerbetrieb T zum Hochsetzstellerbetrieb H ein undefiniertes Resonanzschwingverhalten auftritt, erfolgt ein erfindungsgemäßer Eingriff in die Steuerung. Eine beispielhafte Ausführung ist in Fig. 3 dargestellt. Der Leistungsteil des Tief-Hochsetzstellers bleibt unverändert. Neben der Ausgangsspannung U_{OUT} wird einem Steuerungsteil der Strom durch die Drossel L, nachfolgend Drosselstrom i_{L} genannt, zugeführt. Konkret wird dieser Drosselstrom i_{L} in einem Komparator Komp mit einem Referenzstrom I_{Ref} verglichen. Mittels einfacher Messungen wird der Wert des Referenzstromes I_{Ref} in der Weise festgelegt, dass der parasitäre Kondensator C_{S1} des Tiefsetzer-Schaltelements S1 nach jedem Abschalten des Tiefsetzer-Schaltelements S1 auf die Spannung des Eingangskondensators Ci aufgeladen wird. Alternativ zum Drosselstrom i_{L} kann auch der Strom durch das Tiefsetzer-Schaltelements S1 herangezogen werden, um den passenden Abschaltzeitpunkt des Tiefsetzer-Schaltelements S1 zu bestimmen.

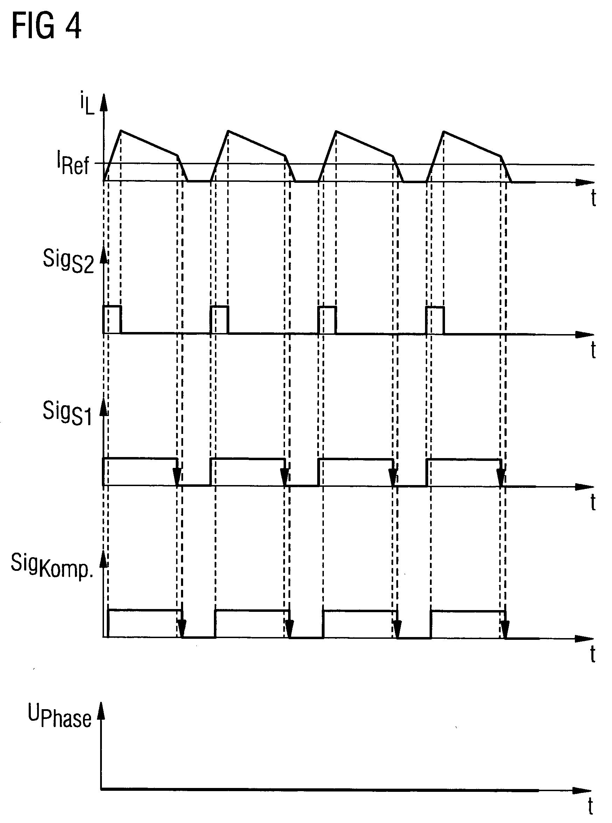

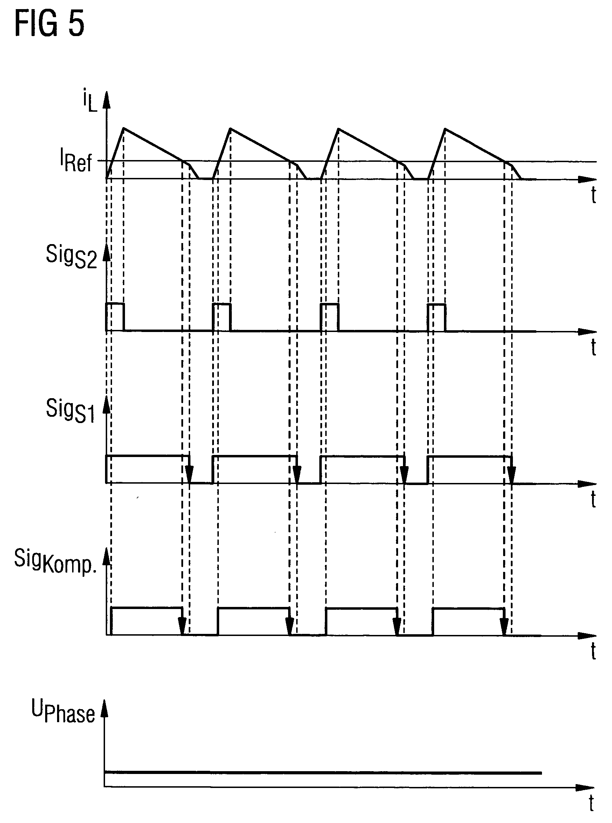

In einem Übergangsbereich zwischen Tiefsetzsteller- und Hochsetzstellerbetrieb steigt der Drosselstrom i_{L} an, solange das Tiefsetzer-Schaltelement S1 und das Hochsetzer-Schaltelement S2 eingeschaltet sind. Nachdem das Hochsetzer-Schaltelement S2 abschaltet, fällt der Drosselstrom i_{L} ab. Dabei wird der Zeitpunkt erfasst, an dem der Drosselstrom i_{L} den Wert des Referenzstromes I_{Ref} erreicht. Diese Erfassung erfolgt mittels eines am Ausgang des Komparators Komp anliegenden Vergleichsignals Sig_{Komp}. Der Signalzustand dieses Vergleichsignals Sig_{Komp} ist beispielsweise gleich Eins, wenn der Drosselstrom i_{L} über dem Referenzstrom I_{Ref} liegt, und gleich Null, wenn der Drosselstrom i_{L} niedriger als der Referenzstrom I_{Ref} ist (Fig. 4, Fig. 5). Ein Wechsel von Eins auf Null signalisiert somit das Erreichen des Referenzstromes I_{Ref}.

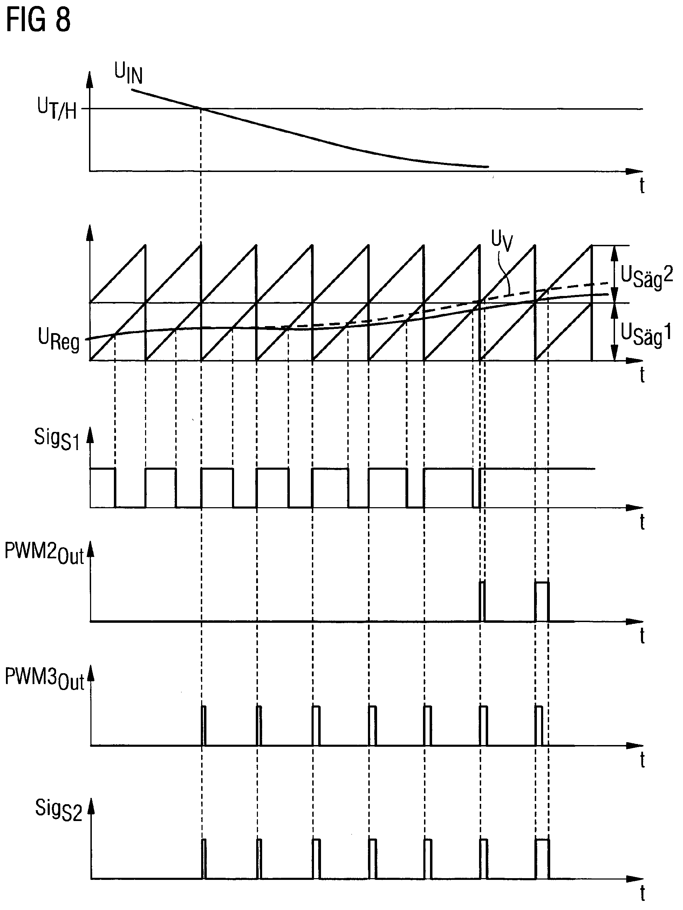

Ein Ausgangsspannungsregler REG vergleicht die Ausgangsspannung U_{OUT} mit einem Sollwert SOLL. Die Regelung wird nachfolgend beispielhaft für den Fall beschrieben, dass eine sinkende Eingangsspannung U_{IN} unter die Ausgangsspannung U_{OUT} abfällt. Ohne Reglereingriff sinkt auch die Ausgangsspannung U_{OUT} ab. Um diesem Ausgangsspannungsabfall entgegenzuwirken, gibt der Ausgangsspannungsregler REG ein höheres Reglersignal U_{REG} vor (Fig. 8). Das Reglersignal U_{REG} wird in einem ersten Pulsweitenmodulator PWM1 einem ersten Sägezahnsignal U_{säg}1 eines Signalgenerators GEN überlagert. Das resultierende pulsweitenmodulierte Schaltsignal Sig_{S1} dient der Ansteuerung des Tiefsetzer-Schaltelements S1. Das Sägezahnsignal U_{Säg}1 ist zudem einem Spitzendetektor PD zur Erfassung eins Spitzenwertsignals des Sägezahnsignals U_{Säg}1 zugeführt. In einem Addierer werden das Sägezahnsignal U_{Säg}1 und das Spitzenwertsignal zu einem versetzten Sägezahnsignal U_{Säg}2 addiert, welches einem zweiten Pulsbreitenmodulator PWM2 zur Erzeugung des zweiten pulsweitenmodulierten Schaltsignals Sig_{S2} zugeführt ist. Dabei wird dem versetzten Sägezahnsignal U_{Säg}2 das verstärkte Reglersignal U_{V} überlagert. Die gleiche Funktionalität wird erreicht, wenn der Signalgenerator GEN anstelle eines Sägezahnsignals ein Dreiecksignal ausgibt.

Das Ausmaß der Reglersignalverstärkung hängt davon ab, wie lange die Zeitspanne zwischen dem Zeitpunkt, an dem der Drosselstrom i_{L} den Wert des Referenzstromes I_{Ref} erreicht, und dem Abschaltzeitpunkt des Tiefsetzer-Schaltelements S1 ist. Falls der Abschaltzeitpunkt vor dem Erreichen des Referenzstromes I_{Ref} liegt, erfolgt keine Verstärkung des Reglersignals U_{REG}.

Günstigerweise wird das verstärkte Reglersignal U_{V} durch Addition des Reglersignals U_{REG} mit einem Phasendifferenzsignal U_{Phase} gebildet.

Die Figuren 4 und 5 zeigen die Bildung des Phasendifferenzsignals U_{Phase}. In Diagrammen sind der Drosselstrom i_{L}, das erste pulsweitenmodulierte Schaltsignal Sig_{S1}, das zweite pulsweitenmodulierte Schaltsignal Sig_{S2}, das Vergleichsignal Sig_{Komp} und das Phasendifferenzsignal U_{Phase} über der Zeit t dargestellt. Durch Vergleich des Drosselstromes i_{L} mit dem Referenzstrom I_{Ref} wird das Vergleichssignal Sig_{Komp} gebildet, wie oben beschrieben. Tritt während eines Schaltzyklus eine abfallende Flanke des Vergleichssignals Sig_{Komp} nach dem Abschaltimpuls des ersten pulsweitenmodulierte Schaltsignal Sig_{S1} auf, bleibt das Phasendifferenzsignals U_{Phase} gleich Null (Fig. 4).

Das Phasendifferenzsignal U_{Phase} ist hingegen ungleich Null, wenn während eines Schaltzyklus eine abfallende Flanke des Vergleichssignals Sig_{Komp} vor dem Abschaltimpuls des ersten pulsweitenmodulierte Schaltsignal Sig_{S1} auftritt. Je länger die Zeitspanne zwischen der abfallenden Flanke des Vergleichsignals Sig_{Komp} und dem Abschaltimpuls ist, desto größer ist das Phasendifferenzsignal U_{Phase} (Fig. 5). Das Phasendifferenzsignal U_{Phase} gibt demnach an, um wie viel später das Tiefsetzer-Schaltelement S1 abschaltet, bezogen auf den Zeitpunkt, an dem der Drosselstrom i_{L} den Wert des Referenzstromes I_{Ref} erreicht. Realisiert wird die Bildung des Phasendifferenzsignals in einfacher Weise mittels einer Flip-Flop-Schaltung und einer nachgeschalteten Glättungsstufe.

Alternativ dazu kann die Bildung des Phasendifferenzsignals U_{Phase} mittels eines Programms erfolgen, welches in einem Mikrokontroller implementiert ist.

Der im Weiteren beschriebene Eingriff in die Regelung verhindert ein zu spätes Abschalten des Tiefsetzer-Schaltelements S1, sodass immer genügend Reststrom vorhanden ist, um den parasitären Kondensator C_{S1} aufzuladen. Sobald ein Phasendifferenzsignal U_{Phase} ungleich Null auftritt, erfolgt eine Verstärkung des Reglersignals U_{REG}. Mittels des verstärkten Reglersignals U_{V} wird das zweite pulsweitenmodulierte Schaltsignal Sig_{S2} gebildet. Während des Übergangs vom Tiefsetzsteller- zum Hochsetzstellerbetrieb bewirkt das verstärkte Reglersignal U_{V}, dass das Hochsetzer-Schaltelement S2 früher und mit längerer Einschaltdauer zu takten beginnt, als dies mittels nicht verstärktem Reglersignal U_{REG} der Fall wäre. Dadurch steigt die Ausgangsspannung U_{OUT} an und der Ausgangsspannungsregler REG gibt ein niedrigeres Reglersignal U_{REG} vor, um die Ausgangsspannung U_{OUT} wieder dem Sollwert SOLL anzugleichen.

Infolge des niedrigeren Reglersignals U_{REG} verkürzt sich die Einschaltdauer des Tiefsetzer-Schaltelements S1. Pro Schaltzyklus erfolgt der Abschaltimpuls früher und der Zeitabstand zur abfallenden Flanke des Vergleichsignals Sig_{Komp} verkürzt sich, bis beide Impulse synchronisiert sind. Diese Regelschleife bewirkt, dass das Phasendifferenzsignal U_{Phase} wieder gegen Null geht.

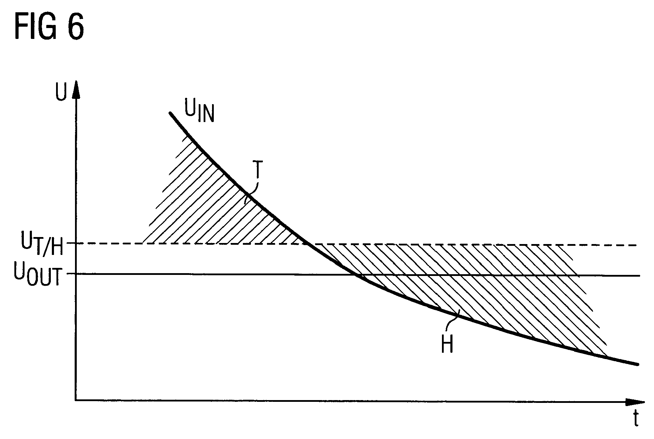

Der beschriebene Eingriff in die Regelung führt dazu, dass der Übergang vom Tiefsetzstellerbetrieb T zum Hochsetzstellerbetrieb H bereits beginnt, wenn die Eingangsspannung U unter eine Spannung U_{T/H} abfällt, die über der Ausgangsspannung U_{OUT} liegt (Fig. 6). Zudem erfolgt auch während des Hoctnsetzstellerbetriebs H weiterhin ein Abschalten des Tiefsetzer-Schaltelements S1.

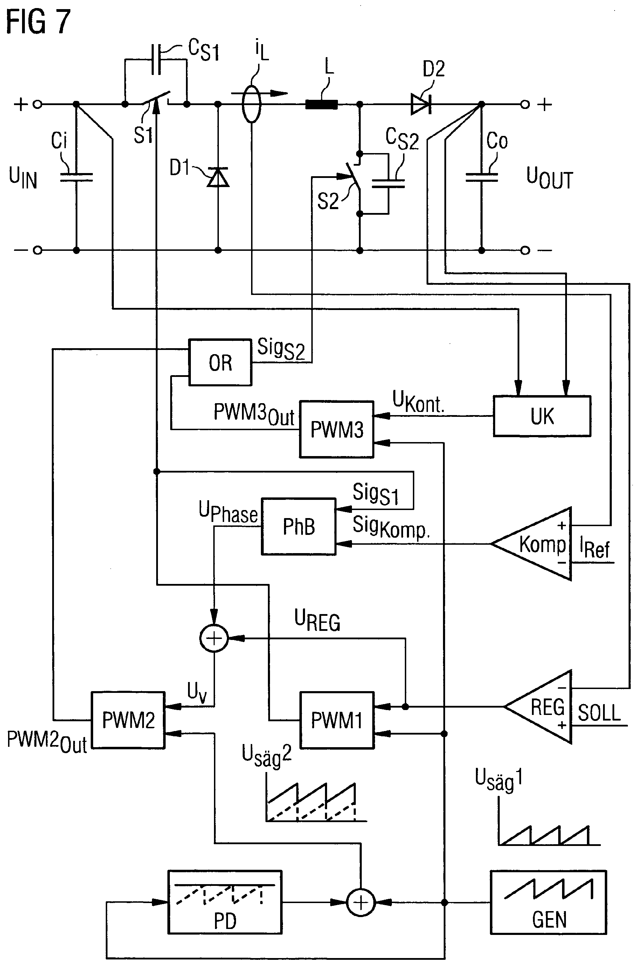

In Fig. 7 ist ein Schaltungsaufbau angegeben, welcher während eines Übergangs vom Tiefsetzstellerbetrieb T zum Hochsetzstellerbetrieb H zusätzlich ein erzwungenes frühres Takten des Hochsetzer-Schaltelements S2 bewirkt, unabhängig vom Ausgangssignal des zweiten Pulsweitenmodulators PWM2. Die entsprechenden Signalverläufe sind in Fig. 8 dargestellt.

Am zweiten Pulsweitenmodulator PWM2 liegt unverändert ein zweites pulsweitenmoduliertes Ausgangssignal PWM2_{OUT} an, welches aus dem weiteren, versetzten Sägezahnsignal U_{Säg}2 und dem verstärkten Reglersignal U_{V} gebildet wird. Dieses Ausgangssignal PWM2_{OUT} steht allerdings nicht mehr unmittelbar als zweites pulsweitenmoduliertes Schaltsignal Sig_{S2} zur Verfügung. Die Bildung des ersten pulsweitenmodulierten Schaltsignals Sig_{S1} bleibt unverändert. Hinzu kommt ein dritter Pulsweitenmodulator PWM3, dem das Sägezahnsignal U_{Säg}1 und ein Ausgangssignal U_{UK} eines Übergangskontrollers UK zugeführt sind.

Der Übergangskontroller UK ist zum Beispiel eine Analogschaltung oder ein digitaler Signalprozessor, der eine Funktion des Ausgangssignals U_{UK} über der Differenz zwischen Eingangspannung U_{IN} und Ausgangsspannung U_{OUT} abbildet. Beispielsweise wird ein Ausgangssignal U_{UK} erzeugt, wenn sich die Eingangspannung U_{IN} einer niedrigeren Ausgangsspannung U_{OUT} annähert und die Differenz zwischen Eingangsspannung U_{IN} und Ausgangsspannung U_{OUT} unter einen Grenzwert abfällt. Der dritte Pulsweitenmodulator PWM gibt ein drittes pulsweitenmoduliertes Ausgangssignal PWM3_{OUT} aus, welches synchron zum zweiten pulsweitenmodulierten Ausgangssignal PWM2_{OUT} verläuft. Allerdings treten die Einschaltimpulse mit ansteigender Einschaltdauer bereits auf, wenn sich die Eingangspannung U_{IN} der Ausgangsspannung U_{OUT} annähert und das zweite pulsweitenmodulierte Ausgangssignal PWM2_{OUT} noch keine Impulse aufweist.

Aus dem zweiten pulsweitenmodulierten Ausgangssignal PWM2_{OUT} und dem dritten pulsweitenmodulierten Ausgangssignal PWM3_{OUT} wird mittels einer Oder-Schaltung OR das zweite pulsweitenmodulierte Schaltsignal Sig_{S2} zur Ansteuerung des Hochsetzer-Schaltelements S2 gebildet.

Dieses Schaltsignal Sig_{S2} entspricht so lange dem dritten pulsweitenmodulierten Ausgangssignal PWM3_{OUT}, bis die Dauer der Schaltimpulse kürzer als jene des synchron verlaufenden zweiten pulsweitenmodulierten Ausgangssignal PWM2_{OUT} werden. Ab diesem Zeitpunkt entspricht das zweite pulsweitenmodulierte Schaltsignal Sig_{S2} dem zweiten pulsweitenmodulierten Ausgangssignal PWM2_{OUT}.

Das dritte pulsweitenmodulierten Ausgangssignal PWM3_{OUT} wird also nur dann zur Ansteuerung des Hochsetzer-Schaltelements S2 herangezogen, wenn die Differenz zwischen Eingangsspannung U_{IN} und Ausgangsspannung U_{OUT} unter den Grenzwert der Differenz abfällt und das zweite pulsweitenmodulierte Ausgangssignal PWM2_{OUT} noch keine Einschaltzeiten liefert, welche jene des dritten pulsweitenmodulierten Ausgangssignals PWM3_{OUT} übersteigen.

Die Ansteuerung des Hochsetzer-Schaltelements S2 unter Einbeziehung des Übergangskontrollers UK erfolgt somit nur in den kurzen Phasen des Übergangs vom Tiefsetzsteller- zum Hochsetzstellerbetrieb, ohne die Regelung weiter zu beeinflussen.

## Patentansprüche

1. Verfahren zur Regelung eines getakteten Tief-Hochsetzstellers, wobei mit einer gemeinsamen Taktfrequenz ein Tiefsetzer-Schaltelement (S1) mit einem ersten pulsweitenmodulierten Schaltsignal (Sig_{S1}) angesteuert wird und ein Hochsetzer-Schaltelement (S2) mit einem zweiten pulsweitenmodulierten Schaltsignal (Sig_{S2}) angesteuert wird, zur Umwandlung einer Eingangsspannung (U_{IN}) in eine geregelte Ausgangsspannung (U_{OUT}), wobei ein Reglersignal (U_{REG}) eines Ausgangsspannungsreglers (REG) zur Erzeugung der pulsweitenmodulierten Schaltsignale (Sig_{S1}, Sig_{S2}) verwendet wird, **dadurch gekennzeichnet, dass** der Tief-Hochsetzsteller in einem diskontinuierlichen Modus mit quasiresonantem Schalten betrieben wird, dass der Drosselstrom (i_{L}) oder der Strom durch das Tiefsetzer-Schaltelement (S1) erfasst und mit einem Referenzstrom (I_{Ref}) verglichen wird, dass das Reglersignal (U_{REG}) in dem Ausmaß verstärkt wird, in dem die Erreichung des Referenzstromes (I_{Ref}) zeitlich vor einem Abschaltimpuls des ersten pulsweitenmodulierten Schaltsignals (Sig_{S1}) auftritt und dass mittels des verstärkten Reglersignals (U_{V}) das zweite pulsweitenmodulierte Schaltsignal (Sig_{S2}) erzeugt wird.

2. Verfahren nach Anspruch 1, **dadurch gekennzeichnet, dass** als Referenzstrom (I_{Ref}) jener Strom vorgegeben wird, welcher erforderlich ist, um einen parasitären Kondensator des Tiefsetzer-Schaltelements (S1) auf den Wert der Eingangsspannung (U_{IN}) aufzuladen.

3. Verfahren nach Anspruch 1 oder 2, **dadurch gekennzeichnet, dass** mittels eines Vergleichs des Drosselstromes (i_{L}) oder des Stromes durch das Tiefsetzer-Schaltelement (S1) mit dem Referenzstrom (I_{Ref}) ein Vergleichssignal (Sig_{Komp}) gebildet wird, welches einen Vergleichsimpuls aufweist, wenn der Drosselstrom (i_{L}) bzw. der Strom durch das Tiefsetzer-Schaltelement (S1) den Wert des Referenzstromes (I_{Ref}) erreicht.

4. Verfahren nach Anspruch 3, **dadurch gekennzeichnet, dass** mittels einer Phasenbewertung (PhB) des ersten pulsweitenmodulierten Schaltsignals (Sig_{S1}) und des Vergleichssignals (Sig_{Komp}) ein Phasendifferenzsignal (U_{Phase}) gebildet wird, dass dabei das Phasendifferenzsignal (U_{Phase}) gleich Null ist, wenn innerhalb eines Schaltzyklus der Vergleichsimpuls des Vergleichssignals (Sig_{Komp}) zeitlich nach dem Abschaltimpuls des ersten pulsweitenmodulierten Schaltsignals (Sig_{S1}) auftritt und dass das Phasendifferenzsignal (U_{Phase}) proportional mit der zeitlichen Differenz zwischen Vergleichsimpuls des Vergleichssignals (Sig_{Komp}) und Abschaltimpuls des ersten pulsweitenmodulierten Schaltsignals (Sig_{S1}) zunimmt, wenn innerhalb eines Schaltzyklus der Vergleichsimpuls des Vergleichssignals (Sig_{Komp}) zeitlich vor dem Abschaltimpuls des ersten pulsweitenmodulierten Schaltsignals (Sig_{S1}) auftritt.

5. Verfahren nach Anspruch 4, **dadurch gekennzeichnet, dass** das Phasendifferenzsignal (U_{Phase}) und das Reglersignal (U_{REG}) zur Erzeugung eines verstärkten Reglersignals (U_{V}) addiert werden.

6. Verfahren nach einem der Ansprüche 1 bis 5, **dadurch gekennzeichnet, dass** das Hochsetzer-Schaltelement (S2) in der Weise angesteuert wird, dass bei einer Annäherung der fallenden Eingangsspannung (U_{IN}) an eine kleinere Ausgangsspannung (U_{OUT}) das Hochsetzer-Schaltelement (S2) mit ansteigendem Tastverhältnis zu takten beginnt, bevor die Eingangsspannung (U_{IN}) gleich der Ausgangsspannung (U_{OUT}) ist.

7. Tief-Hochsetzsteller zur Durchführung eines Verfahrens nach einem der Ansprüche 1 bis 6, wobei ein Reglersignal (U_{REG}) eines Ausgangsspannungsreglers (REG) gemeinsam mit einem Sägezahn- oder Dreieckssignal (U_{Säg}1) einem ersten Pulsweitenmodulator (PWM1)zugeführt ist, an dessen Ausgang ein erstes pulsweitenmoduliertes Schaltsignal (Sig_{S1}) zur Ansteuerung eines Tiefsetz-Schaltelements (S1) anliegt und wobei ein um im Wesentlichen eine Amplitude des Sägezahn- oder Dreiecksignals (U_{Säg}1) versetztes weiteres Sägezahn- oder Dreiecksignal (U_{Säg}2) einem zweiten Pulsweitenmodulator (PWM2) zugeführt ist, an dessen Ausgang ein zweites pulsweitenmoduliertes Schaltsignal (Sig_{S2}) zur Ansteuerung eines Hochsetzer-Schaltelements (S2) anliegt, **dadurch gekennzeichnet, dass** der Drosselstrom (i_{L}) oder der Strom durch das Tiefsetzer-Schaltelement (S1) und ein Referenzstrom (I_{Ref}) einem Komparator (Komp) zugeführt sind, dass ein Vergleichssignal (Sig_{Komp}) am Ausgang des Komparators (Komp) und das erste pulsweitenmodulierte Schaltsignal (Sig_{S1}) einem Phasenbewertungsmodul (PhB) zugeführt sind, dass ein Phasendifferenzsignal (U_{Phase}) am Ausgang des Phasenbewertungsmoduls (PhB) anliegt und dass das mit dem Phasendifferenzsignal (U_{Phase}) verstärkte Reglersignal (U_{REG}) dem zweiten Pulsbreitenmodulator (PWM2) zugeführt ist.

8. Tief-Hochsetzsteller nach Anspruch 7, **dadurch gekennzeichnet, dass** das Phasenbewertungsmodul (PhB) als Funktionsmodul eines Mikrokontrollers ausgebildet ist.

9. Tief-Hochsetzsteller nach Anspruch 7 oder 8, **dadurch gekennzeichnet, dass** das Phasendifferenzsignal (U_{Phase}) und das Reglersignal (U_{REG}) einem Additionsglied zugeführt sind und dass das am Ausgang des Additionsglied anliegende verstärkte Reglersignal (U_{V}) dem zweiten Pulsweitenmodulator (PWM2) zugeführt ist.

10. Tief-Hochsetzsteller nach einem der Ansprüche 7 bis 9, **dadurch gekennzeichnet, dass** ein dritter Pulsweitenmodulator (PWM3) vorgesehen ist, dem das Sägezahn- oder Dreieckssignal (U_{Säg}1) und ein Ausgangssignal (U_{Kont}) eines Übergangskontrollers (UK) zugeführt sind und welcher gemeinsam mit dem zweiten Pulsweitenmodulator (PWM2) über eine Oder-Schaltung (OR) mit dem Hochsetzer-Schaltelement (S2) verbunden ist.

## Claims

1. Method for regulating a clocked buck/boost converter, wherein a buck converter switching element (S1) is driven with a common clock frequency with a first pulse-width-modulated switching signal (Sig_{S1}) and a boost converter switching element (S2) is driven with a second pulse-width-modulated switching signal (Sig_{S2}) for conversion of an input voltage (U_{IN}) into a regulated output voltage (U_{OUT}), wherein a regulator signal (U_{REG}) of an output voltage regulator (REG) is used for creating the pulse-width-modulated switching signals (Sig_{S1}, Sig_{S2}), **characterised in that** the buck/boost converter is operated in a discontinuous mode with valley switching, that the choke current (i_{L}) or the current through the buck converter switching element (S1) is detected and compared with a reference current (I_{Ref}), that the regulator signal (U_{REG}) is amplified to the extent to which reaching the reference current (I_{Ref}) occurs temporally before a switch-off pulse of the first pulse-width-modulated switching signal (Sig_{S1}) and that the second pulse-width-modulated switching signal (Sig_{S2}) is created by means of the amplified regulator signal (U_{V}).

2. Method according to claim 1, **characterised in that** any current which is necessary to charge a parasitic capacitor of the buck converter switching element (S1) to the value of the input voltage (U_{IN}) is specified as the reference current (I_{Ref}).

3. Method according to claim 1 or 2, **characterised in that** a comparison signal (Sig_{Komp}) is formed by means of a comparison of the choke current (i_{L}) or the current through the buck converter switching element (S1) with the reference current (I_{Ref}), which features a comparison pulse, when the choke current (i_{L}) or the current through the buck converter switching element (S1) reaches the value of the reference current (I_{Ref}).

4. Method according to claim 3, **characterised in that** a phase difference signal (U_{Phase}) is formed by means of the phase evaluation (PhB) of the first pulse-width-modulated switching signal (Sig_{S1}) and the comparison signal (Sig_{Komp}), that in this case the phase difference signal (U_{Phase}) is equal to zero if, within a switching cycle, the comparison pulse of the comparison signal (Sig_{Komp}) occurs temporally after the switch-off pulse of the first pulse-width-modulated switching signal (Sig_{S1}) and that the phase difference signal (U_{Phase}) increases in proportion to the temporal difference between comparison pulse of the comparison signal (Sig_{Komp}) and switch-off pulse of the first pulse-width-modulated switching signal (Sig_{S1}) if, within a switching cycle, the comparison pulse of the comparison signal (Sig_{Komp}) occurs temporally before the switch-off pulse of the first pulse-width-modulated switching signal (Sig_{S1}).

5. Method according to claim 4, **characterised in that** the phase difference signal (U_{Phase}) and the regulator signal (U_{REG}) are added to create an amplified regulator signal (U_{V}).

6. Method according to one of claims 1 to 5, **characterised in that** the boost converter switching element (S2) is driven such that, when the falling input voltage (U_{IN}) approaches a smaller output voltage (U_{OUT}), the boost converter switching element (S2) begins to clock with an increasing duty cycle, before the input voltage (U_{IN}) is equal to the output voltage (U_{OUT}).

7. Buck/boost converter for carrying out a method according to one of claims 1 to 6, wherein a regulator signal (U_{REG}) of an output voltage regulator (REG) is fed together with a sawtooth or triangular signal (U_{säg}1) to a first pulse-width modulator (PWM1), at the output of which a first pulse-width-modulated switching signal (Sig_{S1}) for driving a buck converter switching element (S1) is present and wherein a further sawtooth or triangular signal (U_{säg}2) offset essentially by one amplitude of the sawtooth or triangular signal (U_{säg}1) is fed to a second pulse-width modulator (PWM2) at the output of which a second pulse-width-modulated switching signal (Sig_{S2}) for driving a boost converter switching element (S2) is present, **characterised in that** the choke current (i_{L}) or the current through the buck converter switching element (S1) and a reference current (I_{Ref}) are fed to a comparator (Komp), that a comparison signal (Sig_{Komp}) at the output of the comparator (Komp) and the first pulse-width-modulated switching signal (Sig_{S1}) are fed to a phase evaluation module (PhB), that a phase difference signal (U_{Phase}) is present at the output of the phase evaluation module (PhB) and that the regulator signal (U_{REG}) amplified with the phase difference signal (U_{Phase}) is fed to the second pulse-width modulator (PWM2).

8. Buck/boost converter according to claim 7, **characterised in that** the phase evaluation module (PhB) is embodied as a function module of a microcontroller.

9. Buck/boost converter according to claim 7 or 8, **characterised in that** the phase difference signal (U_{Phase}) and the regulator signal (U_{REG}) are fed to an adding element and that the amplified regulator signal (U_{V}) present at the output of the adding element is fed to the second pulse-width modulator (PWM2).

10. Buck/boost converter according to one of claims 7 to 9, **characterised in that** a third pulse-width modulator (PWM3) is provided, to which the sawtooth or triangular signal (U_{säg}1) and an output signal (U_{Kont}) of a transition controller (UK) are fed and which together with the second pulse-width modulator (PWM2) is connected via a logical OR circuit to the boost converter switching element (S2).

## Revendications

1. Procédé de régulation d'un convertisseur abaisseur-élévateur synchronisé selon lequel, avec une fréquence d'horloge commune, un élément de commutation abaisseur (S1) est commandé au moyen d'un premier signal de commutation modulé en largeur d'impulsion (Sig_{S1}) et un élément de commutation élévateur (S2) est commandé au moyen d'un deuxième signal de commutation modulé en largeur d'impulsion (Sig_{S2}), de manière à convertir une tension d'entrée (U_{IN}) en une tension de sortie régulée (U_{OUT}), un signal de régulation (U_{REG}) d'un régulateur de tension de sortie (REG) étant utilisé pour générer les signaux de commutation modulés en largeur d'impulsion (Sig_{S1}, Sig_{S2}), **caractérisé en ce que** le convertisseur abaisseur-élévateur fonctionne selon un mode discontinu à commutation quasi résonnante, **en ce que** le courant d'inductance (i_{L}) ou le courant circulant dans l'élément de commutation abaisseur (S1) est détecté et comparé à un courant de référence (I_{Ref}), **en ce que** le signal de régulation (U_{REG}) est amplifié dans une mesure telle que le courant de référence (I_{Ref}) est atteint avant une impulsion de coupure du premier signal de commutation modulé en largeur d'impulsion (Sig_{S1}) et **en ce que** le deuxième signal de commutation modulé en largeur d'impulsion (Sig_{S2}) est généré au moyen du signal de régulation amplifié (U_{V}).

2. Procédé selon la revendication 1, **caractérisé en ce que,** comme courant de référence (I_{Ref}), est prédéfini le courant qui est nécessaire pour charger un condensateur parasitaire de l'élément de commutation abaisseur (S1) jusqu'à la valeur de la tension d'entrée (U_{IN}).

3. Procédé selon la revendication 1 ou 2, **caractérisé en ce que,** en comparant le courant d'inductance (i_{L}) ou le courant circulant dans l'élément de commutation abaisseur (S₁) au courant de référence (I_{Ref}), un signal de comparaison (Sig_{Komp}) est formé, lequel présente une impulsion de comparaison lorsque le courant d'inductance (i_{L}) resp. le courant circulant dans l'élément de commutation abaisseur (S1) atteint la valeur du courant de référence (I_{Ref}).

4. Procédé selon la revendication 3, **caractérisé en ce que,** au moyen d'une évaluation de phase (PhB) du premier signal de commutation modulé en largeur d'impulsion (Sig_{S1}) et du signal de comparaison (Sig_{Komp}), un signal de différence de phase (U_{Phase}) est formé, **en ce que** le signal de différence de phase (U_{Phase}) est égal à zéro si, en un cycle de commutation, l'impulsion de comparaison du signal de comparaison (Sig_{Komp}) se produit après l'impulsion de coupure du premier signal de commutation modulé en largeur d'impulsion (Sig_{S1}) et **en ce que** le signal de différence de phase (U_{Phase}) augmente proportionnellement à la différence dans le temps entre impulsion de comparaison du signal de comparaison (Sig_{Komp}) et impulsion de coupure du premier signal de commutation modulé en largeur d'impulsion (Sig_{S1}) si, en un cycle de commutation, l'impulsion de comparaison du signal de comparaison (Sig_{Komp}) se produit avant l'impulsion de coupure du premier signal de commutation modulé en largeur d'impulsion (Sig_{S1}).

5. Procédé selon la revendication 4, **caractérisé en ce que** le signal de différence de phase (U_{Phase}) et le signal de régulation (U_{REG}) sont additionnés pour générer un signal de régulation amplifié (U_{V}).

6. Procédé selon l'une des revendications 1 à 5, **caractérisé en ce que** l'élément de commutation élévateur (S2) est commandé de telle manière que lorsque la tension d'entrée (U_{IN}) chute et se rapproche d'une tension de sortie (U_{OUT}) inférieure, l'élément de commutation élévateur (S2) commence à synchroniser à rapport cyclique croissant, avant que la tension d'entrée (U_{IN}) soit égale à la tension de sortie (U_{OUT}).

7. Convertisseur abaisseur-élévateur pour la mise en oeuvre d'un procédé selon l'une des revendications 1 à 6, dans lequel un signal de régulation (U_{REG}) d'un régulateur de tension de sortie (REG) est amené, conjointement avec un signal en dents de scie ou triangulaire (U_{säg}1), à un premier modulateur de largeur d'impulsion (PWM1), à la sortie duquel un premier signal de commutation modulé en largeur d'impulsion (Sig_{S1}) est appliqué pour commander un élément de commutation abaisseur (S1) et dans lequel un autre signal en dents de scie ou triangulaire (U_{Säg}2), décalé essentiellement d'une amplitude du signal en dents de scie ou triangulaire (U_{Säg}1), est amené à un deuxième modulateur de largeur d'impulsion (PWM2), à la sortie duquel un deuxième signal de commutation modulé en largeur d'impulsion (Sig_{S2}) est appliqué pour commander un élément de commutation élévateur (S2), **caractérisé en ce que** le courant d'inductance (i_{L}) ou le courant circulant dans l'élément de commutation abaisseur (S1) et un courant de référence (I_{Ref}) sont amenés à un comparateur (Komp), **en ce qu'**un signal de comparaison (Sig_{Komp}) en sortie du comparateur (Komp) et le premier signal de commutation modulé en largeur d'impulsion (Sig_{S1}) sont amenés à un module d'évaluation de phase (PhB), **en ce qu'**un signal de différence de phase (U_{Phase}) est appliqué à la sortie du module d'évaluation de phase (PhB) et **en ce que** le signal de régulation (U_{REG}) amplifié par le signal de différence de phase (U_{Phase}) est amené au deuxième modulateur de largeur d'impulsion (PWM2).

8. Convertisseur abaisseur-élévateur selon la revendication 7, **caractérisé en ce que** le module d'évaluation de phase (PhB) est réalisé sous forme de module fonctionnel d'un microcontrôleur.

9. Convertisseur abaisseur-élévateur selon la revendication 7 ou 8, **caractérisé en ce que** le signal de différence de phase (U_{Phase}) et le signal de régulation (U_{REG}) sont amenés à un additionneur et **en ce que** le signal de régulation amplifié (U_{V}) appliqué à la sortie de l'additionneur est amené au deuxième modulateur de largeur d'impulsion (PWM2).

10. Convertisseur abaisseur-élévateur selon l'une des revendications 7 à 9, **caractérisé en ce qu**'il est prévu un troisième modulateur de largeur d'impulsion (PWM3) auquel le signal en dents de scie ou triangulaire (U_{Säg}1) et un signal de sortie (U_{Kont}) d'un contrôleur de transition (UK) sont amenés et lequel, conjointement avec le deuxième modulateur de largeur d'impulsion (PWM2), est relié via un circuit OU (OR) à l'élément de commutation élévateur (S2).
